# EUROPÄISCHE PATENTSCHRIFT

(11) **EP 3 391 505 B1**
(45) Veröffentlichungstag und Bekanntmachung des Hinweises auf die Patenterteilung: **07.08.2024**
(21) Anmeldenummer: 16806094.5
(22) Anmeldetag: 06.12.2016
(51) Int. Cl.: H02J 7/36, H02J 7/00

(54) **LADESCHALTUNG UND LADEVERFAHREN FÜR EIN ELEKTRISCHES ENERGIESPEICHERSYSTEM**
CHARGING CIRCUIT AND CHARGING METHOD FOR AN ELECTRICAL ENERGY STORAGE SYSTEM
CIRCUIT DE CHARGE ET PROCÉDÉ DE CHARGE POUR UN SYSTÈME ÉLECTRIQUE D'ACCUMULATION D'ÉNERGIE

(30) Priorität: 18.12.2015 DE 102015225850; 25.11.2016 DE 102016223470
(43) Veröffentlichungstag der Anmeldung: 24.10.2018
(73) Patentinhaber: Robert Bosch GmbH, 70442 Stuttgart (DE)
(72) Erfinder: KRIEG, Berengar, 70839 Gerlingen (DE)
(86) Internationale Anmeldenummer: PCT/EP2016/079804
(87) Internationale Veröffentlichungsnummer: WO 2017/102414

(56) Entgegenhaltungen:
- EP-A1- 1 562 252
- DE-A1- 10 055 531
- DE-B4- 10 055 531
- JP-A- 2008 278 635
- US-A1- 2005 052 154
- US-A1- 2006 092 583

## Beschreibung

Die vorliegende Erfindung geht aus von einer Ladeschaltung für ein elektrisches Energiespeichersystem und einem Ladeverfahren zum Ladebetrieb eines elektrischen Energiespeichersystems gemäß dem Oberbegriff der unabhängigen Patentansprüche.

### Stand der Technik

Das Laden von elektrisch angetriebenen Fahrzeugen, insbesondere von Fahrzeugen mit Batterie als Hauptenergiequelle, ist heutzutage Gegenstand intensiver Forschung und Entwicklung. Zum einen liegt dies daran, dass gegenwärtige Ladezeiten für eine vollständige Batterieladung noch sehr lang sind, und zum anderen wird die Kapazität zukünftiger Speicher eher noch zunehmen, sodass in naher Zukunft im Fahrzeug verbaute elektrische Energiespeichersysteme mit Kapazitäten von mehr als 50 kWh zum Einsatz kommen werden. Gleichzeitig sind für eine breitere Akzeptanz dieser Fahrzeuge kürzere Ladezeiten, möglichst vergleichbar mit den Ladezeiten beim Tankvorgang von Fahrzeugen mit Verbrennungsmotor, wünschenswert.

Bedingt durch technische Standards, verfügbare Bauteile und Technologien sowie Wirkungsgradanforderungen ist eine normale Betriebsspannung des Fahrzeugantriebsstranges derzeit beschränkt auf Werte von typischerweise 300 V bis 450 V bei rein elektrisch angetriebenen Fahrzeugen. Standardkonforme Ladestecker sind typischerweise für Nennströme bis 200 A zertifiziert, wobei die Ladespannung für Gleichspannungsladen typischerweise zwischen 200 V bis 850 V liegen kann. Durch Kommunikation zwischen Energiespeichersystem und Ladeeinrichtung kann ladeeinrichtungsseitig im Rahmen gewisser Grenzen eine stufenlose Regelung von Ladespannung und Ladestrom erfolgen.

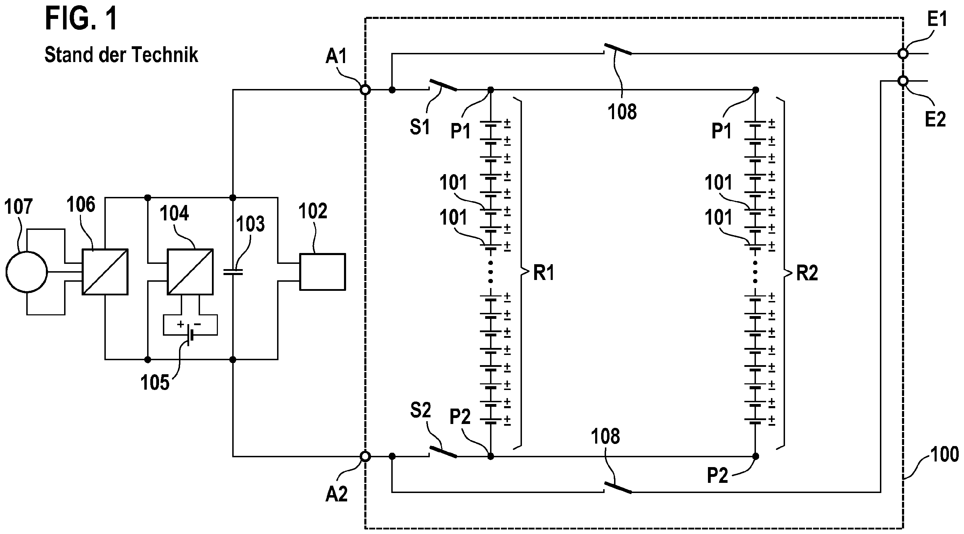

Heutzutage verfügbare elektrische Energiespeichersysteme, insbesondere Batteriesysteme, bieten jedoch keine Möglichkeit, die Spannung beim Laden zu erhöhen, da ihre Verschaltung, beispielsweise in Reihen- oder Parallelschaltung, fest verdrahtet ist, und gleichzeitig die antriebsseitig vorhandenen Komponenten, beispielsweise den Inverter, auf dem normalen Betriebsspannungsniveau weiterzubetreiben. Ein Beispiel für eine Schaltungsanordnung gemäß dem Stand der Technik zeigt Figur 1.

In der Druckschrift JP 2012-065435 wird ein Gleichspannungswandler beschrieben, der mittels mehrerer Kondensatoren eine gegenüber den angeschlossenen Batterien erhöhte Ausgangsspannung ausgeben kann.

Die Druckschrift US 2013/0175865 A1 beschreibt Lade-/Entladesystem für Batterien, wobei ein angeschlossener elektrischer Verbraucher einer erhöhten Spannung ausgesetzt ist.

Aus der Druckschrift US 2013/0106357 A1 ist ein Batteriepack für ein elektrisches Fahrzeug bekannt, bei dem einzelne Batterie des Batteriepacks über Halbleiterschalter ansteuerbar sind.

Die Druckschrift US 2005/0052154 A1 beschreibt ein medizinisches Gerät mit einer Schalteranordnung, dessen Entladespannung höher liegt als seine Ladespannung, um Batteriezellen bei der Ladespannung zu laden und bei der Entladespannung zu entladen.

In der Druckschrift US 2007/0139012 A1 werden ein Schnellladesystem und eine Schnelllademethode beschrieben.

In der Druckschrift DE 100 55 531 A1 offenbart eine elektronische Schaltungsanordnung, wobei die Schaltungsanordnung Schaltelemente aufweist und mindestens ein Teilspannungsnetz umfasst, das eine niedrigere Spannung aufweist als ein Netz mit höherer Spannung, sodass Verbraucher mit unterschiedlichen elektrischen Spannungen betrieben werden können. Weiterhin wird ein entsprechendes Betriebsverfahren beschrieben.

### Offenbarung der Erfindung

### Vorteile der Erfindung

Erfindungsgemäß wird eine Ladeschaltung für ein elektrisches Energiespeichersystem, ein Ladeverfahren zum Ladebetrieb eines elektrischen Energiespeichersystems sowie ein elektrisches Energiespeichersystem mit den kennzeichnenden Merkmalen der unabhängigen Patentansprüche bereitgestellt.

Dabei umfasst die Ladeschaltung für ein elektrisches Energiespeichersystem, welches n elektrische Energiespeichereinheiten mit jeweils einem ersten Pol und einem zweiten Pol aufweist, mindestens einen ersten Eingang und einen zweiten Eingang zur elektrischen Verbindung mit einer Energiequelle, mindestens einen ersten Ausgang und einen zweiten Ausgang zur elektrischen Verbindung mit einer elektrischen Komponente, mindestens n erste Polanschlüsse und n zweite Polanschlüsse, wobei ein i-ter erster Polanschluss mit dem ersten Pol der i-ten elektrischen Energiespeichereinheit und ein i-ter zweiter Polanschluss mit dem zweiten Pol der i-ten elektrischen Energiespeichereinheit elektrisch leitend verbindbar sind. Darüber hinaus weist die Ladeschaltung mindestens n erste Schalter auf, wobei ein erster Anschluss des i-ten ersten Schalters mit dem i-ten ersten Polanschluss der i-ten elektrischen Energiespeichereinheit elektrisch leitend verbunden ist. Die Ladeschaltung umfasst weiterhin mindestens n zweite Schalter, wobei ein erster Anschluss des i-ten zweiten Schalters mit dem i-ten zweiten Polanschluss der i-ten elektrischen Energiespeichereinheit elektrisch leitend verbunden ist, sowie mindestens n-1 dritte Schalter, wobei ein erster Anschluss des k-ten dritten Schalters mit dem ersten Polanschluss der k-ten elektrischen Energiespeichereinheit und ein zweiter Anschluss des k-ten dritten Schalter mit dem zweiten Polanschluss der k+1-ten elektrischen Energiespeichereinheit elektrisch leitend verbunden sind, wobei n > 1 und i <= n sowie k < n natürliche Zahlen sind. Erfindungsgemäß sind ferner der erste Ausgang mit dem zweiten Anschluss des ersten Schalters elektrisch leitend verbunden, der zweite Ausgang mit dem zweiten Anschluss des ersten zweiten Schalters elektrisch leitend verbunden, der erste Eingang mit dem ersten Anschluss des n-ten ersten Schalters elektrisch leitend verbunden sowie der zweite Eingang mit dem ersten Anschluss des ersten zweiten Schalters elektrisch leitend verbunden. Erfindungsgemäß sind ferner die ersten Schalter, die zweiten Schalter und die dritten Schalter derart geschaltet, dass im Ladebetrieb mittels einer an den ersten Eingang und den zweiten Eingang angeschlossenen Energiequelle ein mindestens doppelt so hohes Spannungsniveau zwischen dem ersten Eingang und dem zweiten Eingang anliegt im Vergleich mit dem Spannungsniveau zwischen dem ersten Ausgang und dem zweiten Ausgang. Diese Art der Verschaltung hat den Vorteil, dass durch das erhöhte Spannungsniveau im Ladebetrieb die Ladeleistung mindestens verdoppelt werden kann, was in wesentlich verkürzten Ladezeiten resultiert. Gleichzeitig können ausgangsseitig vorhandene elektrische Komponenten, beispielsweise der Inverter, auf dem normalen Betriebsspannungsniveau weiterbetrieben werden, sodass für diese Komponenten keine neue Entwicklung bzw. der Einsatz neuer Technologien erfolgen muss. Im Rahmen von Schwankungen von Kenngrößen der elektrischen Energiespeichereinheit, beispielsweise Innenwiderstand und Kapazität, kann das erhöhte Spannungsniveau im Ladebetrieb leicht variieren.

Bevorzugt ist die Energiequelle eine Gleichstrom-Energiequelle.

Die Schalter können beispielsweise als Halbleiterschalter, beispielsweise als MOSFETs oder IGBTs, aber auch als elektromechanische Relais oder Schütze ausgeführt werden.

Die Ladeschaltung ist so ausgestaltet, dass der zweite Anschluss des i-ten zweiten Schalters mit dem zweiten Ausgang elektrisch leitend verbunden ist und der zweite Anschluss des i-ten ersten Schalters mit dem ersten Ausgang elektrisch leitend verbunden ist. Dadurch kann eine beliebige Zahl an elektrischen Energiespeichereinheiten zueinander parallel geschaltet werden. Somit steht einer am ersten Ausgang und am zweiten Ausgang angeschlossenen elektrischen Komponente eine größere Energiespeicherkapazität zur Verfügung. Weiterhin kann beispielsweise die elektrische Komponente von der Energiespeichereinheit mit dem höchsten Ladezustand versorgt werden.

Weitere vorteilhafte Ausführungsformen der vorliegenden Erfindung sind Gegenstand der Unteransprüche.

Vorteilhafterweise umfasst die Ladeschaltung mindestens n-1 vierte Schalter, wobei in die elektrische Verbindung zwischen dem zweiten Anschluss des k-ten dritten Schalters mit dem zweiten Polanschluss der k+1-ten elektrischen Energiespeichereinheit der k-te vierte Schalter eingefügt ist und der zweite Anschluss des k-ten dritten Schalters mit einem ersten Anschluss des k-ten vierten Schalters elektrisch leitend verbunden ist sowie ein zweiter Anschluss des k-ten vierten Schalters mit dem zweiten Polanschluss der k+1-ten elektrischen Energiespeichereinheit elektrisch leitend verbunden ist. Dadurch kann bei getrennt verbauten, gegebenenfalls verschlossenen elektrischen Energiespeichereinheiten, beispielsweise zwei Batteriemodulen, auch die die Reihenschaltung herstellende elektrische Leitung allpolig vom Potential der elektrischen Energiespeichereinheiten getrennt werden, was eine Anforderung im Automobilbereich ist.

Gemäß einer Ausgestaltung umfasst die Ladeschaltung für jede zweielementige Teilmenge der n-elementigen Menge der elektrischen Energiespeichereinheiten, die nicht aus benachbarten Elemente besteht, mindestens einen fünften Schalter. Dabei sind ein erster Anschluss des jeweiligen fünften Schalters mit dem ersten Polanschluss der jeweiligen ersten elektrischen Energiespeichereinheit und ein zweiter Anschluss des jeweiligen fünften Schalters mit dem zweiten Polanschluss der jeweiligen zweiten elektrischen Energiespeichereinheit elektrisch leitend verbunden. Dadurch können auch nicht direkt benachbarte elektrische Energiespeichereinheiten miteinander in Reihe verschaltet werden, womit flexiblere Lademöglichkeiten erreicht werden. Beispielsweise können bei drei elektrischen Energiespeichereinheiten 1, 2 und 3 die Einheiten 1 und 3 in Reihe geschaltet werden, um mit höherer Ladespannung geladen zu werden.

Zweckmäßigerweise umfasst die Ladeschaltung für jede zweielementige Teilmenge der n-elementigen Menge der elektrischen Energiespeichereinheiten, die nicht aus benachbarten Elemente besteht, mindestens den fünften Schalter und mindestens einen sechsten Schalter. Dabei sind der erste Anschluss des jeweiligen fünften Schalters mit dem ersten Polanschluss der jeweiligen ersten elektrischen Energiespeichereinheit und der zweite Anschluss des jeweiligen fünften Schalters mit einem ersten Anschluss des jeweiligen sechsten Schalters elektrisch leitend verbunden. Darüber hinaus ist ein zweiter Anschluss des jeweiligen sechsten Schalters mit dem zweiten Polanschluss der jeweiligen zweiten elektrischen Energiespeichereinheit elektrisch leitend verbunden. Dadurch können auch nicht direkt benachbarte elektrische Energiespeichereinheiten miteinander in Reihe verschaltet werden, womit flexiblere Lademöglichkeiten erreicht werden und gleichzeitig erhöhte Sicherheitsanforderungen, beispielsweise eine allpolige Potentialtrennung der Verbindungsleitungen, was bei getrennten Gehäusen gefordert sein kann, erreicht werden.

Gemäß einer weiteren Ausgestaltung der Ladeschaltung ist ein induktives Bauteil, beispielsweise eine Spule, mit mindestens einem ersten Schalter und/oder mindestens einem zweiten Schalter elektrisch leitend in Reihe verbunden. Dadurch kann ein möglicher Ausgleichsstrom beim Herstellen einer Parallelschaltung zwischen elektrischen Energiespeichereinheiten besser begrenzt werden.

Weiterhin ist Gegenstand der Erfindung ein Ladeverfahren zum Ladebetrieb eines elektrischen Energiespeichersystems, wobei das elektrische Energiespeichersystem mindestens zwei elektrische Energiespeichereinheiten und mindestens eine erfindungsgemäße Ladeschaltung aufweist. Erfindungsgemäß umfasst das Verfahren in einem ersten Schritt ein Auswählen von mindestens zwei der n elektrischen Energiespeichereinheiten, welche im Ladebetrieb mittels einer an den ersten Eingang und den zweiten Eingang angeschlossenen Energiequelle geladen werden sollen, und ein Entscheiden, ob eine an den ersten Ausgang und den zweiten Ausgang angeschlossene elektrische Komponente während des Ladens von mindestens einer elektrischen Energiespeichereinheit versorgt werden soll. Dabei kann die angeschlossene Komponente sowohl von elektrischen Energiespeichereinheiten versorgt werden, die geladen werden sollen, als auch von solchen, die nicht geladen werden sollen. Gegebenenfalls kann die elektrische Komponente auch von keiner elektrischen Energiespeichereinheit versorgt werden. Anschließend erfolgt ein Öffnen der ersten Schalter und der zweiten Schalter der zu ladenden elektrischen Energiespeichereinheit, wobei abhängig von der Entscheidung im ersten Schritt diejenigen ersten Schalter und zweiten Schalter geschlossen werden, die zu der mindestens einen die elektrische Komponente versorgenden elektrischen Energiespeichereinheit gehören. Wenn entschieden wurde, dass die elektrische Komponente während des Ladebetriebs von mindestens einer elektrischen Energiespeichereinheit mit Energie versorgt werden soll, dann werden diejenigen ersten Schalter und diejenigen zweiten Schalter nicht geöffnet, die zu den entsprechenden elektrischen Energiespeichereinheiten gehören. In einem dritten Schritt erfolgt ein Schließen derjenigen dritten Schalter, die die zu ladenden elektrischen Energiespeichereinheiten in Reihe verbinden. In einem vierten Schritt wird die Energiezufuhr gestartet mittels einer an den ersten Eingang und den zweiten Eingang angeschlossenen Energiequelle. Durch diese Verfahrensschritte kann die Ladespannung erhöht und gleichzeitig die elektrische Komponente weiterhin mit Energie auf seinem normalen Betriebsspannungsniveau versorgt werden. Eine Anpassung von elektrischen Komponenten kann also vermieden werden.

Weitere vorteilhafte Ausführungsformen sind Gegenstand der Unteransprüche.

Gemäß einem weiteren Aspekt kann vorgesehen sein, dass in einem fünften Schritt ein Schließen derjenigen vierten Schalter erfolgt, die mit denjenigen dritten Schaltern elektrisch leitend verbunden sind, die die zu ladenden elektrischen Energiespeichereinheiten in Reihe verbinden. Dadurch kann eine allpolige Abtrennung vom elektrischen Potential der elektrischen Energiespeichereinheiten erfolgen, was zur Erfüllung von Sicherheitsanforderungen notwendig sein kann.

Zweckmäßigerweise erfolgt in einem sechsten Schritt ein Schließen derjenigen fünften und sechsten Schalter, die die zu ladenden elektrischen Energiespeichereinheiten in Reihe verbinden. Somit können auch nicht benachbarte elektrische Energiespeichereinheiten mit erhöhter Ladespannung geladen werden.

Eine bevorzugte Ausgestaltung des Verfahrens umfasst weiterhin in einem siebten Schritt ein Abschalten der Energiezufuhr, in einem achten Schritt ein Öffnen der die geladenen elektrischen Energiespeichereinheiten elektrisch in Reihe verbindenden Schalter und in einem neunten Schritt ein Schließen der ersten Schalter und der zweiten Schalter der geladenen elektrischen Energiespeichereinheiten. Somit kann ein sicheres und zuverlässiges Umschalten auf Normalbetrieb mit normaler Betriebsspannung erfolgen.

Es ist innerhalb des Verfahrens vorteilhaft, wenn mindestens ein Schalter im neunten Schritt für einen definierten Zeitraum, beispielsweise für einen einstelligen Minutenbereich, getaktet betrieben wird. Dadurch können hohe Ströme bei einem Herstellen beziehungsweise Wiederherstellen einer Parallelschaltung zwischen mindestens zwei elektrischen Energiespeichereinheiten vermieden werden, was beispielsweise eine ungewollte Temperaturerhöhung durch diese Ströme reduzieren kann.

Bevorzugt werden innerhalb des Verfahrens die Ladezustände der einzelnen elektrischen Energiespeichereinheiten überwacht und bei Überschreiten einer definierten Ladezustandsdifferenz zwischen zwei beliebigen elektrischen Energiespeichereinheiten wird eine über den ersten Ausgang und den zweiten Ausgang angeschlossene elektrische Komponente durch geeignete Ansteuerung mindestens der ersten Schalter, der zweiten Schalter und der dritten Schalter von der elektrischen Energiespeichereinheit mit dem höchsten Ladezustand mit Energie versorgt. Gegebenenfalls werden die vierten Schalter, die fünften Schalter und die sechsten Schalter auch angesteuert. Somit kann eine gleichmäßige Ladung der elektrischen Energiespeichereinheiten ermöglicht werden, was hinsichtlich des Alterungsverhaltens der elektrischen Energiespeichereinheiten vorteilhaft ist. Alternativ können auch andere Kriterien als die Ladezustandsdifferenz herangezogen werden. Beispielsweise kann anhand eines Überschreitens einer Temperaturdifferenz zwischen zwei oder mehreren elektrischen Energiespeichereinheiten eine oder mehrere elektrische Energiespeichereinheiten festgelegt werden, die die elektrische Komponente mittels einer geeigneten Ansteuerung der Schalter versorgen. Alternativ kann auch ein Gesundheitszustand der elektrischen Energiespeichereinheiten als Kriterium herangezogen werden, um bei größeren Abweichungen diesbezüglich gezielt diejenige mindestens eine elektrische Energiespeichereinheit zur Versorgung der elektrischen Komponente auszuwählen, die noch nicht so stark gealtert ist wie die übrigen elektrischen Energiespeichereinheiten des Systems. Der Gesundheitszustand umfasst dabei beispielsweise einen Innenwiderstandswert oder einen Kapazitätswert einer elektrischen Energiespeichereinheit.

Vorteilhafterweise werden innerhalb des Verfahrens die elektrischen Energiespeichereinheiten gleichmäßig geladen, indem die im ersten Schritt ausgewählten, zu ladenden elektrischen Energiespeichereinheiten zyklisch gewechselt werden. Dadurch kann der Energieinhalt des Energiespeichersystems maximiert werden.

Gemäß einer weiteren Ausgestaltung des Verfahrens kann in Abhängigkeit der im ersten Schritt getroffenen Entscheidung, ob eine am ersten Ausgang und am zweiten Ausgang angeschlossene elektrische Komponente mit Energie versorgt werden soll, die mindestens eine die elektrische Komponente versorgende elektrische Energiespeichereinheit zyklisch gewechselt werden. Dadurch wird eine gleichmäßige Belastung der elektrischen Energiespeichereinheiten erreicht und ein zu starkes Entladen der mindestens einen die elektrische Komponente versorgenden elektrischen Energiespeichereinheit verhindert.

Weiterhin ist Gegenstand der Erfindung ein elektrisches Energiespeichersystem mit mindestens zwei elektrischen Energiespeichereinheiten, wobei das elektrische Energiespeichersystem eine erfindungsgemäße Ladeschaltung umfasst. Somit kann insbesondere auf Systemebene eine deutliche Reduktion der Ladezeit erreicht werden bei gleichzeitiger Beibehaltung bewährter Technologien.

Unter einer elektrischen Energiespeichereinheit kann insbesondere eine elektrochemische Batteriezelle und/oder ein Batteriemodul mit mindestens einer elektrochemischen Batteriezelle und/oder ein Batteriepack mit mindestens einem Batteriemodul verstanden werden. Zum Beispiel kann die elektrische Energiespeichereinheit eine Lithium-Batteriezelle oder ein Lithium-Batteriemodul oder ein Lithium-Batteriepack sein. Insbesondere kann die elektrische Energiespeichereinheit eine Lithium-Ionen-Batteriezelle oder ein Lithium-Ionen-Batteriemodul oder ein Lithium-Ionen-Batteriepack sein. Weiterhin kann die Batteriezelle vom Typ Lithium-Polymer-Akkumulator, Nickel-Metallhydrid-Akkumulator, Blei-Säure-Akkumulator, Lithium-Luft-Akkumulator oder Lithium-Schwefel-Akkumulator beziehungsweise ganz allgemein ein Akkumulator beliebiger elektrochemischer Zusammensetzung sein.

Es zeigen:
- Figur 1: eine Schaltungsanordnung von elektrischen Energiespeichereinheiten für ein Fahrzeug gemäß dem Stand der Technik,
- Figur 2: eine Ladeschaltung für ein Fahrzeug mit zwei elektrischen Energiespeichereinheiten gemäß einer ersten Ausführungsform, die nicht Teil der Erfindung ist,
- Figur 3: eine erfindungsgemäße Ladeschaltung für ein Fahrzeug mit zwei elektrischen Energiespeichereinheiten gemäß einer zweiten Ausführungsform,
- Figur 4: eine erfindungsgemäße Ladeschaltung für ein Fahrzeug mit zwei elektrischen Energiespeichereinheiten gemäß einer dritten Ausführungsform,
- Figur 5: eine erfindungsgemäße Ladeschaltung für ein Fahrzeug mit drei elektrischen Energiespeichereinheiten gemäß einer vierten Ausführungsform,
- Figur 6: ein Flussdiagramm eines erfindungsgemäßen Verfahrens für ein elektrisches Energiespeichersystem mit drei elektrischen Energiespeichereinheiten gemäß einem Ausführungsbeispiel,
- Figur 7: einen Ladezustandsverlauf bei Einsatz des erfindungsgemäßen Ladeverfahrens gemäß dem Ausführungsbeispiel für ein elektrisches Energiespeichersystem mit drei elektrischen Energiespeichereinheiten, und
- Figur 8: ein Flussdiagramm des erfindungsgemäßen Verfahrens gemäß einer zweiten Ausführungsform für ein elektrisches Energiespeichersystem mit zwei elektrischen Energiespeichereinheiten.

### Ausführungsformen der Erfindung

Gleiche Bezugszeichen bezeichnen in allen Figuren gleiche Vorrichtungskomponenten beziehungsweise Verfahrensschritte.

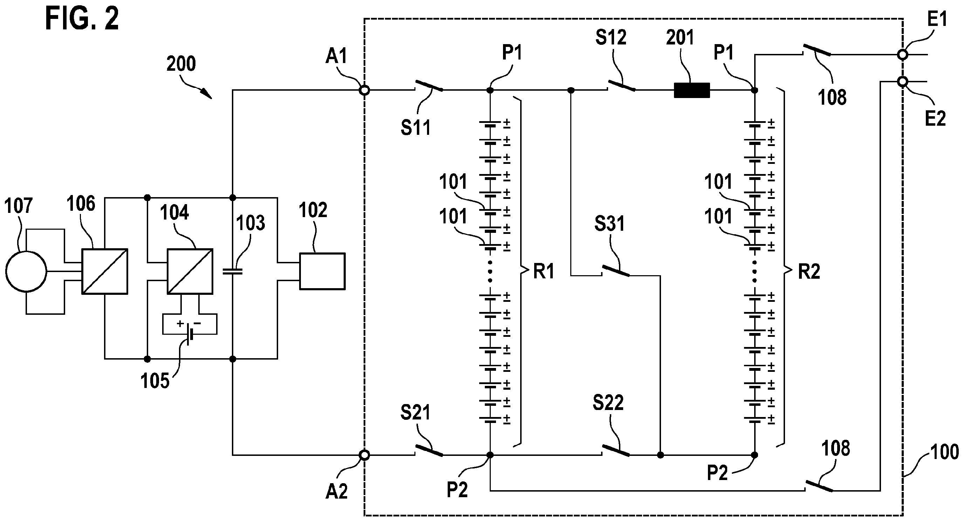

Figur 2 zeigt eine Ladeschaltung 200 für ein Fahrzeug mit zwei elektrischen Energiespeichereinheiten R1 und R2 gemäß einer ersten Ausführungsform, die nicht Teil der Erfindung ist. Im linken Bereich sind dabei elektrische Komponenten abgebildet, welche bei Einsatz der erfindungsgemäßen Ladeschaltung 200 unverändert bleiben können. Insbesondere handelt es sich dabei um einen Elektromotor 107, einen Wechselrichter 106, einen DC/DC-Wandler 104 für das 12-V-Bordnetz und die Bordnetzbatterie 105, einen Zwischenkreis mit Zwischenkreiskapazität 103 und einen Klimakompressor 102. Alle elektrischen Komponenten, die über den ersten Ausgang A1 und den zweiten Ausgang A2 an die Ladeschaltung 200 angeschlossen sind, können demzufolge unverändert weiter genutzt werden. Die elektrischen Energiespeichereinheiten R1 und R2 sind innerhalb der Batterie 100 über die zwei ersten Polanschlüsse P1 und die zwei zweiten Polanschlüsse P2 an die erfindungsgemäße Ladeschaltung 200 angeschlossen. Die elektrischen Energiespeichereinheiten R1 und R2 bestehen dabei aus mehreren einzelnen Batteriezellen 101. Ein erster erster Schalter S11 und ein erster zweiter Schalter S21 dienen insbesondere dazu, eine elektrische Verbindung der ersten elektrischen Energiespeichereinheit R1 mit dem ersten Ausgang A1 beziehungsweise dem zweiten Ausgang A2 zu ermöglichen. Weiterhin dienen ein zweiter erster Schalter S12 und ein zweiter zweiter Schalter S22 insbesondere dazu, eine elektrische Verbindung der zweiten elektrischen Energiespeichereinheit R2 mit dem ersten Ausgang A1 beziehungsweise dem zweiten Ausgang A2 zu ermöglichen. Weiterhin dient ein erster dritter Schalter S31 dazu, im Ladebetrieb die elektrischen Energiespeichereinheiten R1 und R2 in Reihe miteinander zu verschalten. Eine Energiezufuhr erfolgt dabei durch eine an den ersten Eingang E1 und den zweiten Eingang E2 angeschlossene Energiequelle. Über zwei Schalter 108 können der erste Eingang E1 und der zweite Eingang E2 von den Energiespeichereinheiten abgetrennt werden. Somit wird sichergestellt, dass die Eingänge spannungsfrei geschaltet werden können, wenn nicht geladen wird. Die Schalterstellungen der ersten Schalter S11 und S12, der zweiten Schalter S21 und S22 sowie des ersten dritten Schalters S31 und der Schalter 108 bei Reihenschaltung im Ladebetrieb sind in nachstehender Tabelle angegeben:

| | S11 | S12 | S21 | S22 | S31 | 108 |
|---|---|---|---|---|---|---|
| Schalterstellung im Ladebetrieb | geschlossen / geöffnet | geöffnet | geschlossen / geöffnet | geöffnet | geschlossen | geschlossen |

Somit liegt im Ladebetrieb zwischen dem ersten Eingang E1 und dem zweiten Eingang E2 die doppelte Spannung an, es kann demzufolge bei gleichem Strom die doppelte Energiemenge übertragen werden. Dabei ist bei Herstellung der Reihenschaltung darauf zu achten, dass zuerst der zweite erste Schalter S12 und der zweite zweite Schalter S22 geöffnet werden, bevor der erste dritte Schalter S31 geschlossen wird, um einen Kurzschluss zu vermeiden. Dies kann bei mechanischen Schalteinrichtung, beispielsweise Schützen, durch eine gemeinsame mechanische Kopplung des zweiten ersten Schalters S12, des zweiten zweiten Schalter S22 und des ersten dritten Schalters S31 erfolgen mit entsprechendem Nacheilen des Öffnens des ersten dritten Schalters S31 oder bei elektronischen Schalteinrichtungen, beispielsweise MOSFETs oder IGBTs, sowie bei nicht gekoppelten elektromechanischen Schalteinrichtungen durch eine entsprechende Veto-Beschaltung der Ansteuerung beziehungsweise durch entsprechend abgesicherte Softwarefunktionen in einer die Schalteinrichtung kontrollierenden, hier nicht dargestellten elektronischen Einheit. Der erste erste Schalter S11 und der erste zweite Schalter S21 können sich dabei in geschlossenem oder geöffneten Zustand befinden, je nachdem, ob eine oder mehrere über den ersten Ausgang A1 und den zweiten Ausgang A2 angeschlossene elektrische Komponenten auch während des Ladebetriebs mit Energie versorgt werden sollen. Die Versorgung der angeschlossenen elektrischen Komponenten 102 bis 107 ist beispielsweise sinnvoll, um während des Ladevorgangs beispielsweise das Kühlsystem der Batterie 100 und angeschlossene 12V-Verbraucher zu versorgen. Sind der erste erste Schalter S11 und der erste zweite Schalter S21 geschlossen, werden die elektrischen Energiespeichereinheiten R1 und R2 unterschiedlich stark geladen. Die erste elektrische Energiespeichereinheit R1 wird durch einen geringeren Ladestrom geladen und weist deshalb typischerweise bei Beendigung des Ladevorganges einen niedrigeren Ladezustand auf als die zweite elektrische Energiespeichereinheit R2. Wenn der Ladebetrieb beendet wurde und Energie an über den ersten Ausgang A1 und den zweiten Ausgang A2 angeschlossene elektrische Komponenten abgegeben werden soll, ändert sich die Schalterstellung der genannten Schalter wie folgt zu:

| | S11 | S12 | S21 | S22 | S31 | 108 |
|---|---|---|---|---|---|---|
| Schalterstellung im Nichtladebetrieb | geschlossen | geschlossen | geschlossen | geschlossen | geöffnet | geöffnet |

Dabei ist bei Umschaltung von Reihenschaltung der elektrischen Energiespeichereinheiten R1 und R2 auf Parallelschaltung von R1 und R2 darauf zu achten, dass zuerst der erste dritte Schalter S31 geöffnet wird, bevor der zweite erste Schalter S12 und der zweite zweite Schalter S22 umgeschaltet werden, um einen Kurzschluss zu vermeiden. Dies kann mit den vorgenannten Mitteln, beispielsweise einer mechanischen Kopplung, erreicht werden.

Um bei Herstellen der Parallelschaltung zwischen den beiden elektrischen Energiespeichereinheiten einen möglichen Ausgleichsstrom zu begrenzen, ist in die Ladeschaltung 200 eine zusätzliches, hauptsächlich induktiv wirkendes Bauteil 201 integriert. Weiterhin kann zur Ausgleichsstrombegrenzung der zweite erste Schalter S12 für eine gewisse Zeit, beispielsweise einige Minuten, getaktet betrieben werden.

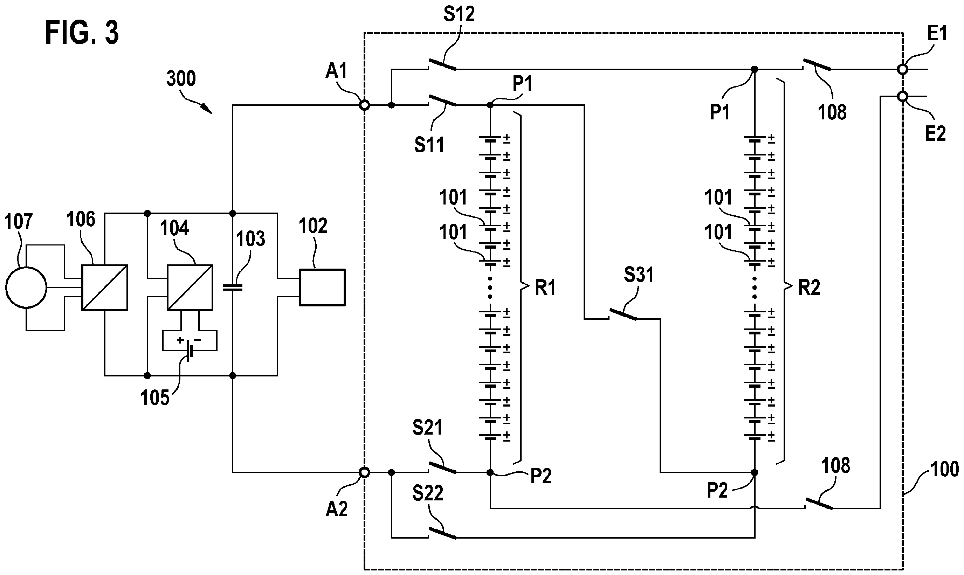

Figur 3 zeigt eine erfindungsgemäße Ladeschaltung 300 für ein Fahrzeug mit zwei elektrischen Energiespeichereinheiten R1 und R2 gemäß einer zweiten Ausführungsform. Hierbei können über den ersten Ausgang A1 und den zweiten Ausgang A2 angeschlossene elektrische Komponenten während des Ladevorgangs sowohl durch die erste elektrische Energiespeichereinheit R1 als auch durch die zweite elektrische Energiespeichereinheit R2 versorgt werden. Dazu sind die ersten Schalter S11 und S12 jeweils mit ihren zweiten Anschlüssen mit dem ersten Ausgang A1 sowie die zweiten Schalter S21 und S22 jeweils mit ihren zweiten Anschlüssen mit dem zweiten Ausgang A2 elektrisch leitend verbunden. Dies ermöglicht ein abwechselndes Zu- beziehungsweise Abschalten der über die ersten und zweiten Ausgänge A1 und A2 angeschlossenen elektrischen Komponenten auf die erste elektrische Energiespeichereinheit R1 beziehungsweise die zweite elektrische Energiespeichereinheit R2. Somit kann ein ungleiches Laden der elektrischen Energiespeichereinheiten R1 und R2 begrenzt werden. Weiterhin kann bei ungleichen Ladezuständen zuerst nur die elektrische Energiespeichereinheit mit dem höheren Ladezustand zur Versorgung der elektrischen Komponenten eingesetzt werden, indem die entsprechenden ersten und zweiten Schalter geschlossen beziehungsweise geöffnet werden. Die Schalter 108 dienen der elektrischen Trennung des ersten Eingangs E1 und des zweiten Eingangs E2 von spannungsführenden Komponenten, hier den elektrischen Energiespeichereinheiten R1 und R2. Somit ist sichergestellt, dass die Batterie 100 allseitig vom Netz getrennt werden kann.

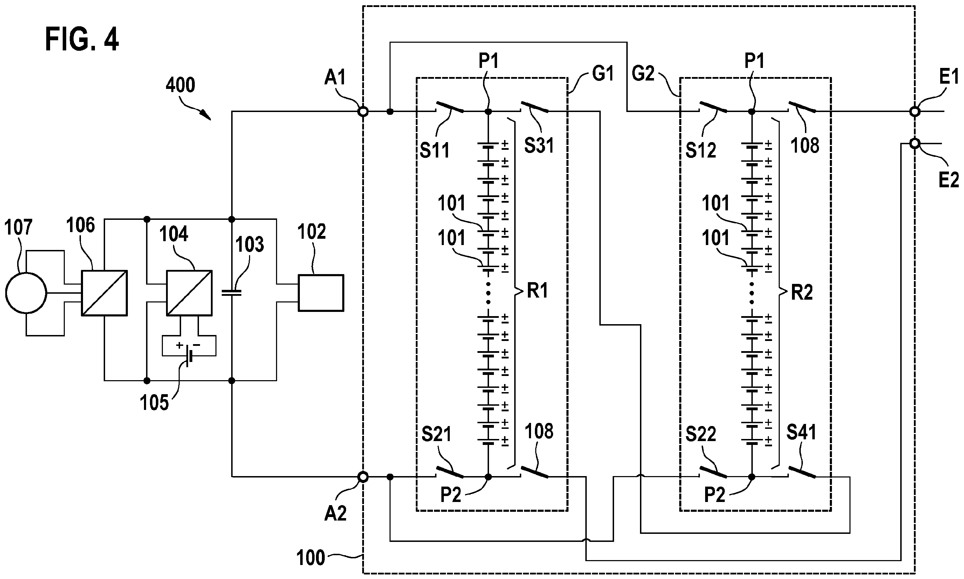

Figur 4 zeigt eine erfindungsgemäße Ladeschaltung 400 für ein Fahrzeug mit zwei elektrischen Energiespeichereinheiten R1 und R2 gemäß einer dritten Ausführungsform. Insbesondere ist durch einen ersten vierten Schalter S41 ein räumlich getrennter Aufbau der elektrischen Energiespeichereinheiten R1 und R2 möglich, der dennoch eine mögliche Sicherheitsanforderung nach allpoliger Trennung der hochspannungsführenden Komponenten, beispielsweise zum Berührschutz nach außen, erlaubt. Die elektrischen Energiespeichereinheiten R1 und R2 samt zugehöriger Schalter werden in separaten Gehäusen G1 beziehungsweise G2 verbaut, wodurch insbesondere Flexibilität bezüglich der Bauraumgestaltung gewonnen werden kann. Zum Laden beziehungsweise zum Starten des Ladebetriebs mit erhöhter Ladespannung ist zusätzlich zum ersten dritten Schalter S31 der erste vierte Schalter S41 zu schließen, sodass eine Reihenschaltung der elektrischen Energiespeichereinheiten R1 und R2 hergestellt wird. Bei Beendigung des Ladebetriebes ist somit zusätzlich zur Öffnung des ersten dritten Schalters S31 der erste vierte Schalter S41 zu öffnen. Zudem ist vorteilhaft, dass die in den separaten Gehäusen G1 und G2 befindlichen Komponenten jeweils gleich sind, das heißt, die Batterie 100 kann aus identischen Modulen beziehungsweise Teilsystemen aufgebaut werden, was Herstellkosten spart und einen möglichen Austausch bei Reparatur vereinfacht.

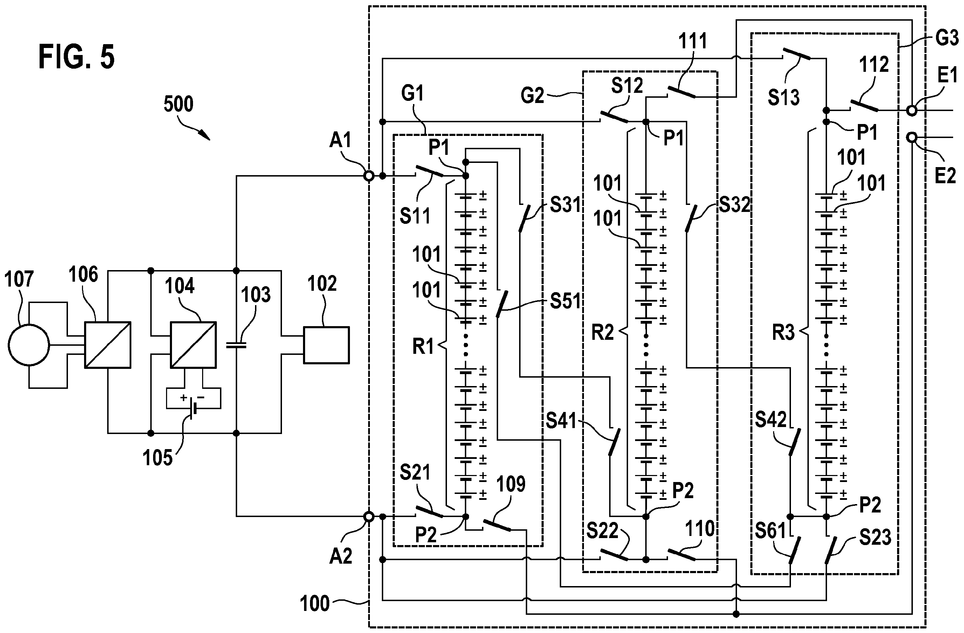

Figur 5 zeigt eine erfindungsgemäße Ladeschaltung 600 für ein Fahrzeug mit drei elektrischen Energiespeichereinheiten R1, R2 und R3 gemäß einer fünften Ausführungsform. Zusätzlich zu den dritten Schaltern S31 und S32 sowie den vierten Schaltern S41 und S42 verfügt die Ladeschaltung über einen fünften Schalter S51 und einen sechsten Schalter S61, die es erlauben, die erste elektrische Energiespeichereinheit R1 mit der dritten elektrischen Energiespeichereinheit R3 in Reihe zu schalten, sodass es möglich ist, zwei beliebige elektrische Energiespeichereinheiten in Reihe zu schalten. Schalter 109, 110, 111 und 112 dienen insbesondere dazu, unzulässig hohe Spannungen an den elektrischen Energiespeichereinheiten R1, R2 und R3 im Ladebetrieb zu verhindern beziehungsweise für die allpolige Trennung vom Potential der elektrischen Energiespeichereinheiten zu sorgen, insbesondere für außen gelegene Anschlüsse an den Gehäusen G1, G2 und G3. Die möglichen Schalterstellungen im Ladebetrieb ergeben sich für eine Reihenschaltung zweier beliebiger Energiespeichereinheiten somit wie folgt:

| | S11 | S12 | S21 | S22 | S31 | S41 | S51 | S61 | S13 | S23 | S32 | S42 | 109 | 110 | 111 | 112 |
|---|---|---|---|---|---|---|---|---|---|---|---|---|---|---|---|---|
| R1 + R2 | x/o | o/x | x/o | o/x | x | x | o | o | x/o | x/o | o | o | x | o | x | o |
| R1 + R3 | x/o | x/o | x/o | x/o | o | o | x | x | o/x | o/x | o | o | x | o | o | x |
| R2 + R3 | x/o | x/o | x/o | x/o | o | o | o | o | o/x | o/x | x | x | o | x | o | x |

Hierbei bezeichnet "x" eine geschlossene Schalterstellung und "o" eine geöffnete Schalterstellung. "x / o" zeigt hierbei an, dass sowohl eine geschlossene als auch eine geöffnete Schalterstellung möglich ist. Beispielsweise kann im Ladebetrieb bei der Reihenschaltung der elektrischen Energiespeichereinheiten R1 und R2 eine über den ersten Ausgang A1 und den zweiten Ausgang A2 angeschlossene elektrische Komponente sowohl über die erste elektrische Energiespeichereinheit R1 als auch die zweite elektrische Energiespeichereinheit R2 als auch die dritte elektrische Energiespeichereinheit R3 mit Energie versorgt werden. Entsprechendes gilt für die weiteren Möglichkeiten der Reihenschaltungen zweier elektrischer Energiespeichereinheiten.

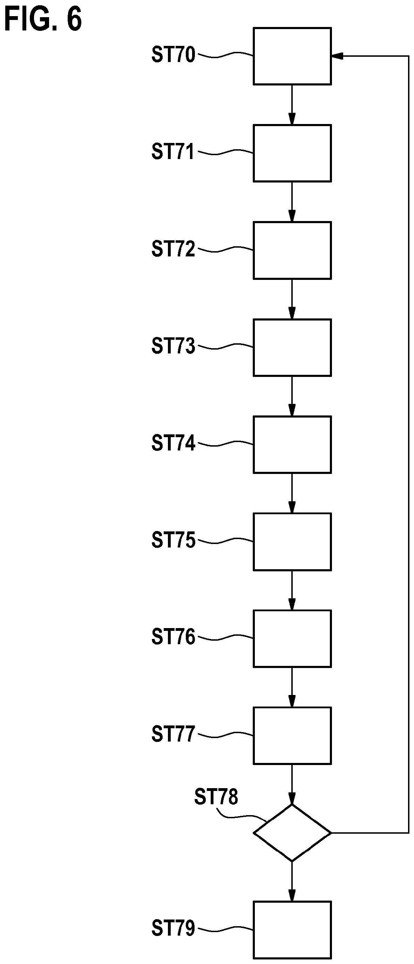

Figur 6 zeigt ein Flussdiagramm eines erfindungsgemäßen Verfahrens für ein elektrisches Energiespeichersystem mit drei elektrischen Energiespeichereinheiten R1, R2 und R3 gemäß einem Ausführungsbeispiel. Die Ausgangsstellung aller Schalter für die nachfolgende exemplarische Beschreibung ist dabei, dass alle Schalter geöffnet sind. In einem ersten Schritt ST70 werden zwei der drei elektrischen Energiespeichereinheiten ausgewählt, welche im Ladebetrieb mittels einer an den ersten Eingang E1 und den zweiten Eingang E2 angeschlossenen Energiequelle geladen werden sollen, beispielsweise die elektrischen Energiespeichereinheiten R1 und R2. Zusätzlich wird festgelegt, ob ein an den ersten Ausgang A1 und an den zweiten Ausgang A2 angeschlossene elektrische Komponente im Ladebetrieb von mindestens einer elektrischen Energiespeichereinheit versorgt werden soll. Beispielsweise erfolgt hier eine Versorgung der elektrischen Komponente durch die dritte elektrische Energiespeichereinheit R3. In einem zweiten Schritt ST71 werden die ersten Schalter S11 und S12 sowie die zweiten Schalter S21 und S22 geöffnet beziehungsweise in geöffneter Position belassen. Der dritte zweite Schalter S23 und der dritte erste Schalter S13 werden geschlossen, um die Versorgung der elektrischen Komponente durch die dritte elektrische Energiespeichereinheit R3 zu gewährleisten. Dabei erfolgt gegebenenfalls eine Vorladung eines Zwischenkreises mit Zwischenkreiskapazität 103 nach Schließen des dritten zweiten Schalters S23 und vor Schließen des dritten ersten Schalters S13. Anschließend wird in einem dritten Schritt ST72 der erste dritte Schalter S31 geschlossen. In einem vierten Schritt ST73 erfolgt ein Schließen des ersten vierten Schalters S41. Damit ist eine Verschaltung in Reihe der elektrischen Energiespeichereinheiten R1 und R2 erreicht. In einem fünften Schritt ST74 erfolgt bei Verschaltung in Reihe der elektrischen Energiespeichereinheiten R1 und R2 keine Aktion, da keine fünften und sechsten Schalter zu schließen sind, um eine Verschaltung in Reihe der elektrischen Energiespeichereinheiten R1 und R2 herzustellen. In einem sechsten Schritt ST75 erfolgt ein Schließen des Schalters 109 und des Schalters 111 sowie ein Starten der Energiezufuhr an die angeschlossenen elektrischen Energiespeichereinheiten R1 und R2 mittels einer an den ersten Eingang E1 und den zweiten Eingang E2 angeschlossenen Energiequelle. In einem siebten Schritt ST76 werden alle Ladezustände der elektrischen Energiespeichereinheiten R1, R2 und R3 überwacht und miteinander verglichen. Falls ein jeweils geforderter Ladezustand für jede der elektrischen Energiespeichereinheiten R1, R2 und R3 erreicht wurde oder für einen definierten Zeitraum geladen wurde, erfolgt in einem achten Schritt ST77 ein Abschalten der Energiezufuhr der an den ersten Eingang E1 und den zweiten Eingang E2 angeschlossenen Gleichstrom-Energiequelle. In einem neunten Schritt ST78 erfolgt anschließend ein Öffnen der die geladenen elektrischen Energiespeichereinheiten in Reihe verbindenden Schalter, in diesem Fall des ersten dritten Schalters S31 und des ersten vierten Schalters S41 sowie der Schalter 109 und 111. Der Ladebetrieb ist somit beendet und die elektrischen Energiespeichereinheiten R1, R2 und R3 werden in einem zehnten Schritt ST79 parallel geschaltet mittels Schließen der ersten Schalter S11, S12 und S13 sowie der zweiten Schalter S21, S22 und S23. Gegebenenfalls wird bei Überschreiten einer definierten Ladezustandsdifferenz zwischen zwei beliebigen elektrischen Energiespeichereinheiten, in diesem Fall zwischen den elektrischen Energiespeichereinheiten R1 und R3 oder R2 und R3, mindestens eine zu ladende elektrische Energiespeichereinheit gewechselt, beispielsweise zyklisch, um ein gleichmäßiges Laden aller elektrischen Energiespeichereinheiten zu ermöglichen. Ebenso kann als Kriterium ein definierter Ladezeitraum verwendet werden. Das Verfahren beginnt anschließend wieder im ersten Schritt ST70, wobei die Schalterstellungen entsprechend den vorstehenden Ausführungen angepasst werden. Die zu ladenden elektrischen Energiespeichereinheiten sind nun die elektrischen Energiespeichereinheiten R1 und R3. Das Verfahren wird sinngemäß zum vorstehend beschriebenen Ablauf weiter ausgeführt, bis die geforderten Ladezustände für die elektrischen Energiespeichereinheiten R1, R2 und R3 erreicht sind. Beim Umschalten beziehungsweise Wechseln zwischen den die elektrischen Komponenten des Fahrzeugs versorgenden elektrischen Energiespeichereinheiten ist es vorteilhaft, den elektrischen Komponenten, beispielsweise dem Klimakompressor 102, vor Öffnung der entsprechenden Schalter, beispielsweise des dritten ersten Schalters S13 und des dritten zweiten Schalters S23, zu signalisieren, ihren Verbrauch zu minimieren. Somit kann ein zu starkes Absinken der Spannung im Zwischenkreis vermieden werden. Weiterhin ist es auch möglich einen weiteren Schritt vorzusehen, in dem alle elektrischen Energiespeichereinheiten parallel geschaltet sind und wobei mit reduzierten Ladeleistung geladen wird. Dieser Schritt kann sich beispielsweise an den Schritt ST79 anschließen.

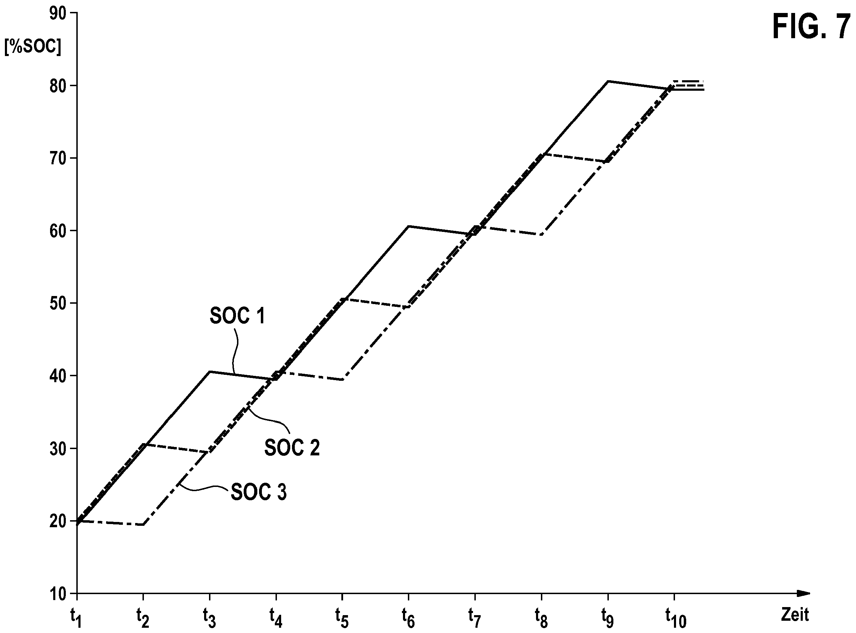

Figur 7 zeigt einen Ladezustandsverlauf bei Einsatz des erfindungsgemäßen Ladeverfahrens für das elektrisches Energiespeichersystem mit den drei elektrischen Energiespeichereinheiten R1, R2 und R3 gemäß dem Ausführungsbeispiel. Ein Laden der elektrischen Energiespeichereinheiten R1 und R2 beginnt zu einem Zeitpunkt t₁, wobei die elektrischen Energiespeichereinheit R3 jetzt die über den ersten Ausgang A1 und den zweiten Ausgang A2 angeschlossenen elektrischen Komponenten mit Energie versorgt, was sich insbesondere in einem sinkenden Ladezustand SOC3 der dritten elektrischen Energiespeichereinheit R3 zeigt. Ab einem Zeitpunkt t₂ erfolgt das Laden der ersten elektrischen Energiespeichereinheit R1 und der dritten elektrischen Energiespeichereinheiten R3, wobei die zweite elektrische Energiespeichereinheit R2 jetzt über den ersten Ausgang A1 und den zweiten Ausgang A2 angeschlossene elektrische Komponenten mit Energie versorgt, was sich insbesondere in einem sinkenden Ladezustand SOC2 der zweiten elektrischen Energiespeichereinheit R2 zeigt. Ab einem Zeitpunkt t₃ erfolgt das Laden der zweiten elektrischen Energiespeichereinheit R2 und der dritten elektrischen Energiespeichereinheit R3, wobei die erste elektrische Energiespeichereinheit R1 jetzt die über den ersten Ausgang A1 und den zweiten Ausgang A2 angeschlossenen elektrischen Komponenten mit Energie versorgt, was sich insbesondere in einem sinkenden Ladezustand SOC1 der ersten elektrischen Energiespeichereinheit R1 zeigt. Ab einem Zeitpunkt t₄ setzt sich das Verfahren und somit der Ladezustandsverlauf sinngemäß fort, bis zu einem Zeitpunkt t₁₀ ein jeweils geforderter Ladezustand für jede der drei elektrischen Energiespeichereinheiten R1, R2 und R3 erreicht ist. Es schließt sich eine Phase des Ladezustandsausgleich an, sobald alle drei elektrischen Energiespeichereinheiten R1, R2 und R3 parallel geschaltet sind, um über den ersten Ausgang A1 und den zweiten Ausgang A2 die elektrische Komponente zu versorgen.

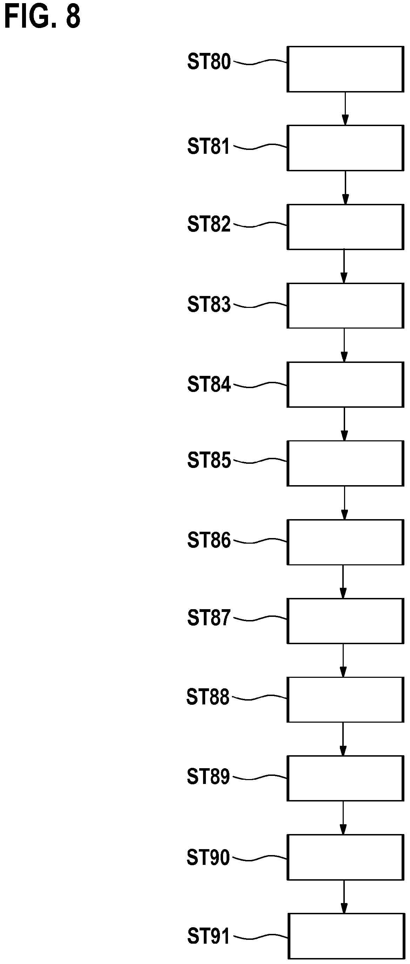

Figur 8 zeigt ein Flussdiagramm des erfindungsgemäßen Verfahrens gemäß einer zweiten Ausführungsform für ein elektrisches Energiespeichersystem mit zwei elektrischen Energiespeichereinheiten R1, R2, wie dies beispielsweise in Figur 4 dargestellt ist. Die Ausgangsstellung aller Schalter für die nachfolgende exemplarische Beschreibung ist dabei, dass alle Schalter geöffnet sind. Dabei entsprechen ein erster Schritt ST80 im Wesentlichen dem ersten Schritt ST70 aus der vorstehenden Ausführungsform, ein zweiter Schritt ST81 im Wesentlichen dem zweiten Schritt ST71, ein dritter Schritt ST82 im Wesentlichen dem dritten Schritt ST72 und ein vierter Schritt ST83 im Wesentlichen dem vierten Schritt ST73. Diese werden nachstehend kurz aufgeführt. In dem ersten Schritt ST80 werden die zwei elektrischen Energiespeichereinheiten R1, R2 mittels einer an den ersten Eingang E1 und den zweiten Eingang E2 angeschlossenen Energiequelle zum Laden ausgewählt. Zusätzlich wird festgelegt, ob eine an den ersten Ausgang A1 und den zweiten Ausgang A2 angeschlossene elektrische Komponente im Ladebetrieb von mindestens einer elektrischen Energiespeichereinheit mit elektrischer Energie versorgt wird. Beispielsweise soll eine Versorgung der elektrischen Komponente durch die zweite elektrische Energiespeichereinheit R2 erfolgen. Dazu werden in einem zweiten Schritt ST81 der zweite erste Schalter S12 sowie der zweite zweite Schalter S22 geschlossen und der erste erste Schalter S11 sowie der erste zweite Schalter S21 in geöffneter Position belassen. Anschließend wird in dem dritten Schritt ST82 der erste dritte Schalter S31 geschlossen. In dem nachfolgenden vierten Schritt ST83 wird der erste vierte Schalter S41 geschlossen. Damit ist eine Verschaltung der elektrischen Energiespeichereinheiten R1, R2 in Reihe erreicht. In einem fünften Schritt ST84 erfolgt ein Schließen der Schalter 108 sowie ein Starten der Energiezufuhr an die elektrischen Energiespeichereinheiten R1, R2 mittels einer an den ersten Eingang E1 und den zweiten Eingang E2 angeschlossenen elektrischen Energiequelle, um die elektrischen Energiespeichereinheiten R1, R2 zu laden. In einem sechsten Schritt ST85 werden die Ladezustände der elektrischen Energiespeichereinheiten R1, R2 während des Ladens überwacht und miteinander verglichen. Falls ein jeweils geforderter Ladezustand, beispielsweise 90 %, für jede der elektrischen Energiespeichereinheiten R1, R2 erreicht wird oder ein vordefinierter Ladezeitraum erreicht wird, erfolgt in einem siebten Schritt ST86 ein Abschalten der Energiezufuhr der elektrischen Energiequelle, wobei weiterhin die Schalter 108 wieder geöffnet werden. In einem achten Schritt ST87 erfolgt anschließend ein Öffnen der die geladenen elektrischen Energiespeichereinheiten elektrisch in Reihe verbindenden Schalter, in diesem Fall des ersten dritten Schalters S31 und des ersten vierten Schalters S41. Anschließend erfolgt in einem neunten Schritt ST88 ein Vergleich der Ladezustände der beiden elektrischen Energiespeichereinheiten R1, R2. Unter der Annahme, dass die elektrische Energiespeichereinheit R1 einen höheren Ladezustand als die elektrische Energiespeichereinheit R2 aufweist und die vordefinierte Ladezustandsdifferenz zwischen den elektrischen Energiespeichereinheiten R1, R2 überschritten wird, wird in einem zehnten Schritt ST89 eine elektrische Verbindung zwischen der elektrischen Energiespeichereinheit R1 und dem ersten Ausgang A1 sowie dem zweiten Ausgang A2 hergestellt, wozu der erste erste Schalter S11 und der erste zweite Schalter S21 geschlossen werden. Gleichzeitig wird die elektrische Verbindung zwischen der elektrischen Energiespeichereinheit R2 und dem ersten Ausgang A1 und dem zweiten Ausgang A2 durch Öffnen des zweiten ersten Schalters S12 und des zweiten zweiten Schalters S22 unterbrochen. Somit wird in einem elften Schritt ST90 die elektrische Komponente mit elektrischer Energie aus der elektrischen Energiespeichereinheit R1 mit dem höchsten Ladezustand versorgt, bis sich der Ladezustand der elektrischen Energiespeichereinheit R1 an den Ladezustand der elektrischen Energiespeichereinheit R2 angeglichen hat, beispielsweise bis auf die vordefinierte Ladezustandsdifferenz angeglichen hat. Anschließend werden in einem zwölften Schritt ST91 der zweite erste Schalter S12 und der zweite zweite Schalter S22 geschlossen. Somit sind die elektrischen Energiespeichereinheiten R1, R2 wieder parallel geschaltet und versorgen die elektrische Komponente am Ausgang gemeinsam.

## Patentansprüche

1. Ladeschaltung (200, 300, 400, 500) für ein elektrisches Energiespeichersystem (100) mit n elektrischen Energiespeichereinheiten (R1, R2, R3) mit jeweils einem ersten Pol und einem zweiten Pol, umfassend
- mindestens einen ersten Eingang (E1) und einen zweiten Eingang (E2) zur elektrischen Verbindung mit einer Energiequelle,
- mindestens einen ersten Ausgang (A1) und einen zweiten Ausgang (A2) zur elektrischen Verbindung mit einer elektrischen Komponente,
- mindestens n erste Polanschlüsse (P1) und n zweite Polanschlüsse (P2), wobei ein i-ter erster Polanschluss (P1) mit dem ersten Pol der i-ten elektrischen Energiespeichereinheit (R1, R2, R3) und ein i-ter zweiter Polanschluss (P2) mit dem zweiten Pol der i-ten elektrischen Energiespeichereinheit (R1, R2, R3) elektrisch leitend verbindbar sind,
- mindestens n erste Schalter (S11, S12, S13), wobei ein erster Anschluss des i-ten ersten Schalters (S11, S12, S13) mit dem i-ten ersten Polanschluss (P1) der i-ten elektrischen Energiespeichereinheit (R1, R2, R3) elektrisch leitend verbunden ist,
- mindestens n zweite Schalter (S21, S22, S23), wobei ein erster Anschluss des i-ten zweiten Schalters (S21, S22, S23) mit dem i-ten zweiten Polanschluss der i-ten elektrischen Energiespeichereinheit (R1, R2, R3) elektrisch leitend verbunden ist,
- mindestens n-1 dritte Schalter (S31, S32), wobei ein erster Anschluss des k-ten dritten Schalters (S31, S32) mit dem ersten Polanschluss der k-ten elektrischen Energiespeichereinheit (R1, R2, R3) und ein zweiter Anschluss des k-ten dritten Schalters (S31, S32) mit dem zweiten Polanschluss der k+1-ten elektrischen Energiespeichereinheit (R1, R2, R3) elektrisch leitend verbunden sind, wobei n > 1 und i <=n, k < n natürliche Zahlen sind,
wobei
der erste Ausgang (A1) mit dem zweiten Anschluss des ersten Schalters (S11) elektrisch leitend verbunden ist, der zweite Ausgang (A2) mit dem zweiten Anschluss des ersten zweiten Schalters (S21) elektrisch leitend verbunden ist, der erste Eingang (E1) mit dem ersten Anschluss des n-ten ersten Schalters (S12, S13) elektrisch leitend verbunden ist, der zweite Eingang (E2) mit dem ersten Anschluss des ersten zweiten Schalters (S21) elektrisch leitend verbunden ist und die ersten Schalter (S11, S12, S13), die zweiten Schalter (S21, S22, S23) und die dritten Schalter (S31, S32) derart geschaltet sind, dass im Ladebetrieb mittels einer an den ersten Eingang (E1) und den zweiten Eingang (E2) angeschlossenen Energiequelle ein mindestens doppelt so hohes Spannungsniveau zwischen dem ersten Eingang (E1) und dem zweiten Eingang (E2) anliegt im Vergleich mit einem Spannungsniveau zwischen dem ersten Ausgang (A1) und dem zweiten Ausgang (A2),
**dadurch gekennzeichnet, dass** der zweite Anschluss des i-ten zweiten Schalters (S21, S22, S23) mit dem zweiten Ausgang (A2) elektrisch leitend verbunden ist und der zweite Anschluss des i-ten ersten Schalters (S11, S12, S13) mit dem ersten Ausgang (A1) elektrisch leitend verbunden ist.

2. Ladeschaltung (200, 300, 400, 500) gemäß einem der vorhergehenden Ansprüche, **dadurch gekennzeichnet, dass** die Ladeschaltung (200, 300, 400, 500) mindestens n vierte Schalter (S41, S42) umfasst und in die elektrische Verbindung zwischen dem zweiten Anschluss des k-ten dritten Schalters (S31, S32) mit dem zweiten Polanschluss (P2) der k+1-ten elektrischen Energiespeichereinheit (R2, R3) der k-te vierte Schalter (S41, S42) eingefügt ist, wobei der zweite Anschluss des k-ten dritten Schalters (S31, S32) mit einem ersten Anschluss des k-ten vierten Schalters (S41, S42) elektrisch leitend verbunden ist und ein zweiter Anschluss des k-ten vierten Schalters mit dem zweiten Polanschluss (P2) der k+1-ten elektrischen Energiespeichereinheit (R2, R3) elektrisch leitend verbunden ist.

3. Ladeschaltung (200, 300, 400, 500) gemäß einem der vorhergehenden Ansprüche, **dadurch gekennzeichnet, dass** die Ladeschaltung (200, 300, 400, 500) für jede zweielementige Teilmenge der n-elementigen Menge der elektrischen Energiespeichereinheiten (R1, R2, R3), die nicht aus benachbarten Elementen besteht, mindestens einen fünften Schalter (S51) und mindestens einen sechsten Schalter (S61) umfasst, wobei ein erster Anschluss des jeweiligen fünften Schalters (S51) mit dem ersten Polanschluss (P1) der jeweiligen ersten elektrischen Energiespeichereinheit (R1) und ein zweiter Anschluss des jeweiligen fünften Schalters (S51) mit einem ersten Anschluss des jeweiligen sechsten Schalters (S61) elektrisch leitend verbunden sind und wobei ein zweiter Anschluss des jeweiligen sechsten Schalters (S61) mit dem zweiten Polanschluss (P2) der jeweiligen zweiten elektrischen Energiespeichereinheit (R3) elektrisch leitend verbunden ist.

4. Ladeschaltung (200, 300, 400, 500) gemäß einem der vorhergehenden Ansprüche, **dadurch gekennzeichnet, dass** ein induktives Bauteil (201) mit mindestens einem ersten Schalter (S11, S12, S13) und/oder mindestens einem zweiten Schalter (S21, S22, S23) elektrisch leitend in Reihe verbunden ist.

5. Elektrisches Energiespeichersystem (100) mit mindestens zwei elektrischen Energiespeichereinheiten (R1, R2, R3), **dadurch gekennzeichnet, dass** das elektrische Energiespeichersystem (100) eine Ladeschaltung (200, 300, 400, 500, 600) gemäß einem der Ansprüche 1 bis 4 umfasst.

6. Ladeverfahren zum Ladebetrieb eines elektrischen Energiespeichersystems (100) mit n elektrischen Energiespeichereinheiten (R1, R2, R3), wobei n > 1 gilt, und mit mindestens einer Ladeschaltung (200, 300, 400, 500) gemäß einem der Ansprüche 1 bis 4, umfassend folgende Schritte:
a) Auswählen von mindestens zwei der n elektrischen Energiespeichereinheiten (R1, R2, R3), welche im Ladebetrieb mittels einer an den ersten Eingang (E1) und den zweiten Eingang (E2) angeschlossenen Energiequelle geladen werden sollen und Entscheiden, ob eine an den ersten Ausgang (A1) und den zweiten Ausgang (A2) angeschlossene elektrische Komponente während des Ladens von mindestens einer elektrischen Energiespeichereinheit (R1, R2, R3) versorgt werden soll (ST70),
b) Öffnen der ersten Schalter (S11, S12, S13) und der zweiten Schalter (S21, S22, S23) der zu ladenden elektrischen Energiespeichereinheiten (R1, R2, R3), wobei abhängig von der Entscheidung in Schritt a) diejenigen ersten Schalter (S11, S12, S13) und diejenigen zweiten Schalter (S21, S22, S23) geschlossen werden, die zu der mindestens einen die elektrische Komponente versorgenden elektrischen Energiespeichereinheit (R1, R2, R3) gehören (ST71),
c) Schließen derjenigen dritten Schalter (S31, S32), die die zu ladenden elektrischen Energiespeichereinheiten in Reihe verbinden (ST72),
d) Starten der Energiezufuhr mittels einer an den ersten und zweiten Eingang angeschlossenen Energiequelle (ST75).

7. Ladeverfahren gemäß dem vorhergehenden Anspruch, weiterhin umfassend folgenden Schritt:
e) Schließen derjenigen vierten Schalter (S41, S42), die mit denjenigen dritten Schaltern (S31, S32) elektrisch leitend verbunden sind, die die zu ladenden elektrischen Energiespeichereinheiten (R1, R2, R3) in Reihe elektrisch leitend verbinden (ST73).

8. Ladeverfahren gemäß einem der Ansprüche 6 oder 7, weiterhin umfassend folgenden Schritt:
f) Schließen derjenigen fünften Schalter (S51) und sechsten Schalter (S61), die die zu ladenden elektrischen Energiespeichereinheiten (R1, R2, R3) in Reihe verbinden (ST74).

9. Ladeverfahren gemäß einem der Ansprüche 6 bis 8, weiterhin umfassend folgende Schritte:
g) Abschalten der Energiezufuhr (ST77),
h) Öffnen der die geladenen elektrischen Energiespeichereinheiten (R1, R2, R3) elektrisch in Reihe verbindenden Schalter (ST78),
i) Schließen der ersten Schalter (S11, S12, S13) und der zweiten Schalter (S21, S22, S23) der geladenen elektrischen Energiespeichereinheiten (R1, R2, R3) (ST79).

10. Ladeverfahren gemäß Anspruch 9, weiterhin umfassend folgende Schritte nach dem Schritt h):
j) Vergleichen der Ladezustände der n elektrischen Energiespeichereinheiten (R1, R2, R3);
k) Bei Überschreiten einer vordefinierten Ladezustandsdifferenz zwischen den n elektrischen Energiespeichereinheiten (R1, R2, R3) Herstellen einer elektrischen Verbindung zwischen der elektrischen Energiespeichereinheit mit dem geringsten Ladezustand und der Energiequelle sowie Unterbrechen der elektrischen Verbindung zwischen den übrigen n-1 elektrischen Energiespeichereinheiten und der Energiequelle durch geeignete Ansteuerung mindestens der ersten Schalter (S11, S12, S13) und der zweiten Schalter (S21, S22, S23);
l) Laden der elektrischen Energiespeichereinheit mit dem geringsten Ladezustand durch Starten der Energiezufuhr durch die Energiequelle, wobei ein Spannungsniveau der Energiequelle auf ein zwischen dem ersten Pol und dem zweiten Pol der elektrischen Energiespeichereinheit mit dem geringsten Ladezustand herrschendes Spannungsniveau eingestellt wird, bis sich der Ladezustand der elektrischen Energiespeichereinheit mindestens bis auf die vordefinierte Ladezustandsdifferenz den Ladezuständen der übrigen n-1 elektrischen Energiespeichereinheiten angeglichen hat.
m) Abschalten der Energiezufuhr der Energiequelle.

11. Ladeverfahren gemäß Anspruch 9, weiterhin umfassend folgende Schritte nach dem Schritt h) bei Versorgung einer elektrischen Komponente über den ersten Ausgang (A1) und den zweiten Ausgang (A2):
n) Vergleichen der Ladezustände der n elektrischen Energiespeichereinheiten (R1, R2, R3);
o) Bei Überschreiten der vordefinierten Ladezustandsdifferenz zwischen den n elektrischen Energiespeichereinheiten (R1, R2, R3) Herstellen einer elektrischen Verbindung zwischen der elektrischen Energiespeichereinheit mit dem höchsten Ladezustand und dem ersten Ausgang (A1) sowie dem zweiten Ausgang (A2) sowie Unterbrechen der elektrischen Verbindung zwischen den übrigen n-1 elektrischen Energiespeichereinheiten und dem ersten Ausgang (A1) und/oder dem zweiten Ausgang (A2) durch geeignete Ansteuerung mindestens der ersten Schalter (S11, S12, S13) und der zweiten Schalter (S21, S22, S23);
p) Versorgen der elektrischen Komponente mit elektrischer Energie durch die elektrischen Energiespeichereinheit mit dem höchsten Ladezustand, bis sich der Ladezustand der elektrischen Energiespeichereinheit mindestens bis auf die vordefinierte Ladezustandsdifferenz den Ladezuständen der übrigen n-1 elektrischen Energiespeichereinheiten angeglichen hat.

12. Ladeverfahren gemäß Anspruch 9, **dadurch gekennzeichnet, dass** mindestens ein Schalter im Schritt i) für einen definierten Zeitraum getaktet betrieben wird.

13. Ladeverfahren gemäß einem der Ansprüche 6 bis 10, **dadurch gekennzeichnet, dass** die Ladezustände (SOC1, SOC2, SOC3) der einzelnen elektrischen Energiespeichereinheiten (R1, R2, R3) überwacht werden und bei Überschreiten einer definierten Ladezustandsdifferenz zwischen zwei beliebigen elektrischen Energiespeichereinheiten (R1, R2, R3) eine über den ersten Ausgang (A1) und den zweiten Ausgang (A2) angeschlossene elektrische Komponente durch geeignete Ansteuerung mindestens der ersten (S11, S12, S13), der zweiten (S21, S22, S23) und der dritten Schalter (S31, S32) von der elektrischen Energiespeichereinheit (R1, R2, R3) mit dem höchsten Ladezustand (SOC1, SOC2, SOC3) mit Energie versorgt wird.

14. Ladeverfahren gemäß einem der Ansprüche 6 bis 11, **dadurch gekennzeichnet, dass** die elektrischen Energiespeichereinheiten (R1, R2, R3) gleichmäßig geladen werden, indem mindestens eine der in Schritt a) ausgewählten, zu ladenden elektrischen Energiespeichereinheiten (R1, R2, R3) gewechselt wird.

15. Ladeverfahren gemäß einem der Ansprüche 6 bis 12, **dadurch gekennzeichnet, dass** abhängig von der Entscheidung in Schritt a) die mindestens eine die elektrische Komponente versorgende elektrische Energiespeichereinheit (R1, R2, R3) zyklisch gewechselt wird.

## Claims

1. Charging circuit (200, 300, 400, 500) for an electrical energy storage system (100) having n electrical energy storage units (R1, R2, R3) that each have a first pole and a second pole, comprising
- at least one first input (E1) and one second input (E2) for electrical connection to an energy source,
- at least one first output (A1) and one second output (A2) for electrical connection to an electrical component,
- at least n first pole connections (P1) and n second pole connections (P2), an i-th first pole connection (P1) and an i-th second pole connection (P2) being able to be electrically conductively connected to the first pole of the i-th electrical energy storage unit (R1, R2, R3) and to the second pole of the i-th electrical energy storage unit (R1, R2, R3), respectively,
- at least n first switches (S11, S12, S13), a first connection of the i-th first switch (S11, S12, S13) being electrically conductively connected to the i-th first pole connection (P1) of the i-th electrical energy storage unit (R1, R2, R3),
- at least n second switches (S21, S22, S23), a first connection of the i-th second switch (S21, S22, S23) being electrically conductively connected to the i-th second pole connection of the i-th electrical energy storage unit (R1, R2, R3),
- at least n-1 third switches (S31, S32), a first connection of the k-th third switch (S31, S32) being electrically conductively connected to the first pole connection of the k-th electrical energy storage unit (R1, R2, R3) and a second connection of the k-th third switch (S31, S32) being electrically conductively connected to the second pole connection of the k+1-th electrical energy storage unit (R1, R2, R3), n > 1 and i <=n, k < n being natural numbers,
wherein
the first output (A1) is electrically conductively connected to the second connection of the first switch (S11), the second output (A2) is electrically conductively connected to the second connection of the first second switch (S21), the first input (E1) is electrically conductively connected to the first connection of the n-th first switch (S12, S13), the second input (E2) is electrically conductively connected to the first connection of the first second switch (S21), and the first switches (S11, S12, S13), the second switches (S21, S22, S23) and the third switches (S31, S32) are connected in such a way that in the charging mode a voltage level that is at least twice as high as a voltage level between the first output (A1) and the second output (A2) is applied between the first input (E1) and the second input (E2) by means of an energy source connected to the first input (E1) and the second input (E2).
**characterized in that** the second connection of the i-th second switch (S21, S22, S23) is electrically conductively connected to the second output (A2) and the second connection of the i-th first switch (S11, S12, S13) is electrically conductively connected to the first output (A1).

2. Charging circuit (200, 300, 400, 500) according to one of the preceding claims, **characterized in that** the charging circuit (200, 300, 400, 500) comprises at least n fourth switches (S41, S42) and the k-th fourth switch (S41, S42) is inserted in the electrical connection between the second connection of the k-th third switch (S31, S32) and the second pole connection (P2) of the k+1-th electrical energy storage unit (R2, R3), the second connection of the k-th third switch (S31, S32) being electrically conductively connected to a first connection of the k-th fourth switch (S41, S42) and a second connection of the k-th fourth switch being electrically conductively connected to the second pole connection (P2) of the k+1-th electrical energy storage unit (R2, R3).

3. Charging circuit (200, 300, 400, 500) according to either of the preceding claims, **characterized in that** for each two-element subset of the n-element set of electrical energy storage units (R1, R2, R3) that does not consist of neighbouring elements, the charging circuit (200, 300, 400, 500) comprises at least one fifth switch (S51) and at least one sixth switch (S61), a first connection of the respective fifth switch (S51) and a second connection of the respective fifth switch (S51) being electrically conductively connected to the first pole connection (P1) of the respective first electrical energy storage unit (R1) and to a first connection of the respective sixth switch (S61), respectively, and a second connection of the respective sixth switch (S61) being electrically conductively connected to the second pole connection (P2) of the respective second electrical energy storage unit (R3).

4. Charging circuit (200, 300, 400, 500) according to one of the preceding claims, **characterized in that** an inductive component (201) is electrically conductively connected in series with at least one first switch (S11, S12, S13) and/or at least one second switch (S21, S22, S23).

5. Electrical energy storage system (100) having at least two electrical energy storage units (R1, R2, R3), **characterized in that** the electrical energy storage system (100) comprises a charging circuit (200, 300, 400, 500, 600) according to one of Claims 1 to 4.

6. Charging method for the charging mode of an electrical energy storage system (100) having n electrical energy storage units (R1, R2, R3), where n > 1, and having at least one charging circuit (200, 300, 400, 500) according to one of Claims 1 to 4, comprising the following steps:
a) selecting at least two of the n electrical energy storage units (R1, R2, R3) to be charged in the charging mode by means of an energy source connected to the first input (E1) and the second input (E2), and deciding whether an electrical component connected to the first output (A1) and the second output (A2) is to be supplied with power by at least one electrical energy storage unit (R1, R2, R3) during charging (ST70),
b) opening the first switches (S11, S12, S13) and the second switches (S21, S22, S23) of the electrical energy storage units (R1, R2, R3) to be charged, the decision in step a) being taken as a basis for closing those first switches (S11, S12, S13) and those second switches (S21, S22, S23) that belong to the at least one electrical energy storage unit (R1, R2, R3) supplying power to the electrical component (ST71),
c) closing those third switches (S31, S32) that connect the electrical energy storage units to be charged in series (ST72),
d) starting the supply of energy by means of an energy source connected to the first and second inputs (ST75).

7. Charging method according to the preceding claim, further comprising the following step:
e) closing those fourth switches (S41, S42) that are electrically conductively connected to those third switches (S31, S32) that electrically conductively connect the electrical energy storage units (R1, R2, R3) to be charged in series (ST73).

8. Charging method according to either of Claims 6 and 7, further comprising the following step:
f) closing those fifth switches (S51) and sixth switches (S61) that connect the electrical energy storage units (R1, R2, R3) to be charged in series (ST74).

9. Charging method according to one of Claims 6 to 8, further comprising the following steps:
g) switching off the supply of energy (ST77),
h) opening the switches that electrically connect the charged electrical energy storage units (R1, R2, R3) in series (ST78),
i) closing the first switches (S11, S12, S13) and the second switches (S21, S22, S23) of the charged electrical energy storage units (R1, R2, R3) (ST79).

10. Charging method according to Claim 9, further comprising the following steps after step h):
j) comparing the states of charge of the n electrical energy storage units (R1, R2, R3);
k) if a predefined state-of-charge difference between the n electrical energy storage units (R1, R2, R3) is exceeded, making an electrical connection between the electrical energy storage unit having the lowest state of charge and the energy source and breaking the electrical connection between the remaining n-1 electrical energy storage units and the energy source by suitably driving at least the first switches (S11, S12, S13) and the second switches (S21, S22, S23);
l) charging the electrical energy storage unit having the lowest state of charge by starting the supply of energy by the energy source, a voltage level of the energy source being set to a voltage level that obtains between the first pole and the second pole of the electrical energy storage unit having the lowest state of charge, until the state of charge of the electrical energy storage unit has aligned itself with the states of charge of the remaining n-1 electrical energy storage units, at least except for the predefined state-of-charge difference;
m) switching off the supply of energy from the energy source.

11. Charging method according to Claim 9, further comprising the following steps after step h) when an electrical component is supplied with power via the first output (A1) and the second output (A2):
n) comparing the states of charge of the n electrical energy storage units (R1, R2, R3);
o) if a predefined state-of-charge difference between the n electrical energy storage units (R1, R2, R3) is exceeded, making an electrical connection between the electrical energy storage unit having the highest state of charge and the first output (A1) and the second output (A2) and breaking the electrical connection between the remaining n-1 electrical energy storage units and the first output (A1) and/or the second output (A2) by suitably driving at least the first switches (S11, S12, S13) and the second switches (S21, S22, S23);
p) supplying the electrical component with electrical energy by way of the electrical energy storage unit having the highest state of charge until the state of charge of the electrical energy storage unit has aligned itself with the states of charge of the remaining n-1 electrical energy storage units, at least except for the predefined state-of-charge difference.

12. Charging method according to Claim 9, **characterized in that** at least one switch is operated in a clocked mode for a defined period of time in step i).

13. Charging method according to one of Claims 6 to 10, **characterized in that** the states of charge (SOC1, SOC2, SOC3) of the individual electrical energy storage units (R1, R2, R3) are monitored and, if a defined state-of-charge difference between any two electrical energy storage units (R1, R2, R3) is exceeded, an electrical component connected via the first output (A1) and the second output (A2) is supplied with energy by the electrical energy storage unit (R1, R2, R3) having the highest state of charge (SOC1, SOC2, SOC3) by suitably driving at least the first (S11, S12, S13), the second (S21, S22, S23) and the third (S31, S32) switch.

14. Charging method according to one of Claims 6 to 11, **characterized in that** the electrical energy storage units (R1, R2, R3) are charged uniformly by exchanging at least one of the electrical energy storage units (R1, R2, R3) to be charged that are selected in step a).

15. Charging method according to one of Claims 6 to 12, **characterized in that** the decision in step a) is taken as a basis for cyclically exchanging the at least one electrical energy storage unit (R1, R2, R3) supplying power to the electrical component.

## Revendications

1. Circuit de charge (200, 300, 400, 500) pour un système d'accumulation d'énergie électrique (100) comprenant n unités d'accumulation d'énergie électrique (R1, R2, R3) ayant respectivement un premier pôle et un deuxième pôle, comprenant
- au moins une première entrée (E1) et une deuxième entrée (E2) destinées à la connexion électrique à une source d'énergie,
- au moins une première sortie (A1) et une deuxième sortie (A2) destinées à la connexion électrique à un composant électrique,
- au moins n premières bornes polaires (P1) et n deuxièmes bornes polaires (P2), une i-ème première borne polaire (P1) pouvant être reliée de manière électriquement conductrice au premier pôle de l'i-ème unité d'accumulation d'énergie électrique (R1, R2, R3) et une i-ème deuxième borne polaire (P2) au deuxièmes pôle de l'i-ème unité d'accumulation d'énergie électrique (R1, R2, R3),
- au moins n premiers commutateurs (S11, S12, S13), une première borne du i-ème premier commutateur (S11, S12, S13) étant reliée de manière électriquement conductrice à l'i-ème première borne polaire (P1) de l'i-ème unité d'accumulation d'énergie électrique (R1, R2, R3),
- au moins n deuxièmes commutateurs (S21, S22, S23), une première borne du i-ème deuxième commutateur (S21, S22, S23) étant reliée de manière électriquement conductrice à l'i-ème deuxième borne polaire (P1) de l'i-ème unité d'accumulation d'énergie électrique (R1, R2, R3),
- au moins n-1 troisièmes commutateurs (S31, S32), une première borne du k-ième troisième commutateur (S31, S32) étant reliée de manière électriquement conductrice à la première borne polaire de la k-ième unité d'accumulation d'énergie électrique (R1, R2, R3) et une deuxième borne du k-ième troisième commutateur (S31, S32) à la deuxième borne polaire de la k+1-ième unité d'accumulation d'énergie électrique (R1, R2, R3), où n > 1 et i <=n, k < n sont des nombres naturels,
la première sortie (A1) étant reliée de manière électriquement conductrice à la deuxième borne du premier commutateur (S11), la deuxième sortie (A2) étant reliée de manière électriquement conductrice à la deuxième borne du premier deuxième commutateur (S21), la première entrée (E1) étant reliée de manière électriquement conductrice à la première borne du n-ième premier commutateur (S12, S13), la deuxième entrée (E2) étant reliée de manière électriquement conductrice à la première borne du premier deuxième commutateur (S21) et les premiers commutateurs (S11, S12, S13), les deuxièmes commutateurs (S21, S22, S23) et les troisièmes commutateurs (S31, S32) étant commutés de telle sorte que, en mode de charge au moyen d'une source d'énergie raccordée à la première entrée (E1) et à la deuxième entrée (E2), un niveau de tension au moins deux fois plus élevé est appliqué entre la première entrée (E1) et la deuxième entrée (E2) par rapport à un niveau de tension entre la première sortie (A1) et la deuxième sortie (A2),
**caractérisé en ce que** la deuxième borne du ième deuxième commutateur (S21, S22, S23) est reliée de manière électriquement conductrice à la deuxième sortie (A2) et la deuxième borne du ième premier commutateur (S11, S12, S13) est reliée de manière électriquement conductrice à la première sortie (A1).

2. Circuit de charge (200, 300, 400, 500) selon l'une des revendications précédentes, **caractérisé en ce que** le circuit de charge (200, 300, 400, 500) comporte au moins n quatrièmes commutateurs (S41, S42) et, le k-ième commutateur (S41, S42) est inséré dans la connexion électrique entre la deuxième borne du k-ième troisième commutateur (S31, S32) et la deuxième borne polaire (P2) de la k+1-ième unité d'accumulation d'énergie électrique (R2, R3), la deuxième borne du k-ième troisième commutateur (S31, S32) étant reliée de manière électriquement conductrice à une première borne du k-ième quatrième commutateur (S41, S42) et une deuxième borne du k-ième quatrième commutateur étant reliée de manière électriquement conductrice à la deuxième borne polaire (P2) de la k+1-ième unité d'accumulation d'énergie électrique (R2, R3).

3. Circuit de charge (200, 300, 400, 500) selon l'une des revendications précédentes, **caractérisé en ce que** le circuit de charge (200, 300, 400, 500) comporte, pour chaque sous-ensemble à deux éléments de l'ensemble à n éléments des unités d'accumulation d'énergie électrique (R1, R2, R3) qui n'est pas constitué d'éléments adjacents, au moins un cinquième commutateur (S51) et au moins un sixième commutateur (S61), une première borne du cinquième commutateur (S51) respectif étant reliée de manière électriquement conductrice à la première borne polaire (P1) de la première unité d'accumulation d'énergie électrique (R1) respective et une deuxième borne du cinquième commutateur (S51) respectif à une première borne du sixième commutateur (S61) respectif et une deuxième borne du sixième commutateur (S61) respectif étant reliée de manière électriquement conductrice à la deuxième borne polaire (P2) de la deuxième unité d'accumulation d'énergie électrique (R3) respective.

4. Circuit de charge (200, 300, 400, 500) selon l'une des revendications précédentes, **caractérisé en ce qu'**un composant inductif (201) est relié en série de manière électriquement conductrice à au moins un premier commutateur (S11, S12, S13) et/ou à au moins un deuxième commutateur (S21, S22, S23).

5. Système d'accumulation d'énergie électrique (100) comprenant au moins deux unités d'accumulation d'énergie électrique (R1, R2, R3), **caractérisé en ce que** le système d'accumulation d'énergie électrique (100) comporte un circuit de charge (200, 300, 400, 500, 600) selon l'une des revendications 1 à 4.

6. Procédé de charge pour le régime de charge d'un système d'accumulation d'énergie électrique (100) comprenant n unités d'accumulation d'énergie électrique (R1, R2, R3), avec n > 1, et comprenant au moins un circuit de charge (200, 300, 400, 500) selon l'une des revendications 1 à 4, comprenant les étapes suivantes :
a) sélection d'au moins deux des n unités d'accumulation d'énergie électrique (R1, R2, R3) qui doivent être chargées en régime de charge au moyen d'une source d'énergie raccordée à la première entrée (E1) et à la deuxième entrée (E2), et décision si un composant électrique raccordé à la première sortie (A1) et à la deuxième sortie (A2) doit être alimenté par au moins une unité d'accumulation d'énergie électrique (R1, R2, R3) pendant la charge (ST70),
b) ouverture des premiers commutateurs (S11, S12, S13) et des deuxièmes commutateurs (S21, S22, S23) des unités d'accumulation d'énergie électrique (R1, R2, R3) à charger, les premiers commutateurs (S11, S12, S13) et les deuxièmes commutateurs (S21, S22, S23) qui appartiennent à l'au moins une unité d'accumulation d'énergie électrique (R1, R2, R3) alimentant le composant électrique étant fermés (ST71) en fonction de la décision prise à l'étape a),
c) fermeture de ceux des troisièmes commutateurs (S31, S32) qui relient en série les unités d'accumulation d'énergie électrique à charger (ST72),
d) démarrage de l'apport d'énergie au moyen d'une source d'énergie raccordée à la première et à la deuxième entrée (ST75).

7. Procédé de charge selon la revendication précédente, comprenant en outre l'étape suivante :
e) fermeture des quatrièmes commutateurs (S41, S42) qui sont reliés de manière électriquement conductrice aux troisièmes commutateurs (S31, S32), lesquels relient de manière électriquement conductrice en série les unités d'accumulation d'énergie électrique (R1, R2, R3) à charger (ST73).

8. Procédé de charge selon l'une des revendications 6 ou 7, comprenant en outre l'étape suivante :
f) fermeture de ceux des cinquième (S51) et sixième (S61) commutateur qui relient en série les unités d'accumulation d'énergie électrique à charger (R1, R2, R3) (ST74).

9. Procédé de charge selon l'une des revendications 6 à 8, comprenant en outre les étapes suivantes :
g) coupure de l'apport d'énergie (ST77),
h) ouverture des commutateurs (ST78) qui relient électriquement en série les unités d'accumulation d'énergie électrique (R1, R2, R3) chargées,
i) fermeture des premiers commutateurs (S11, S12, S13) et des deuxièmes commutateurs (S21, S22, S23) des unités d'accumulation d'énergie électrique (R1, R2, R3) chargées (ST79).

10. Procédé de charge selon la revendication 9, comprenant en outre les étapes suivantes après l'étape h) :
j) comparaison des états de charge des n unités d'accumulation d'énergie électrique (R1, R2, R3) ;
k) en cas de dépassement d'une différence d'état de charge prédéfinie entre les n unités d'accumulation d'énergie électrique (R1, R2, R3), établissement d'une liaison électrique entre l'unité d'accumulation d'énergie électrique ayant l'état de charge le plus faible et la source d'énergie, ainsi qu'interruption de la liaison électrique entre les n-1 unités d'accumulation d'énergie électrique restantes et la source d'énergie par une commande appropriée d'au moins les premiers commutateurs (S11, S12, S13) et les deuxièmes commutateurs (S21, S22, S23) ;
l) charge de l'unité d'accumulation d'énergie électrique ayant l'état de charge le plus faible en démarrant l'apport d'énergie par la source d'énergie, un niveau de tension de la source d'énergie étant réglé à un niveau de tension qui règne entre le premier pôle et le deuxième pôle de l'unité d'accumulation d'énergie électrique ayant l'état de charge le plus faible, jusqu'à ce que l'état de charge de l'unité d'accumulation d'énergie électrique se soit aligné, au moins à la différence d'état de charge prédéfinie, sur les états de charge des n-1 unités d'accumulation d'énergie électrique restantes ;
m) coupure de l'apport d'énergie de la source d'énergie.

11. Procédé de charge selon la revendication 9, comprenant en outre les étapes suivantes après l'étape h) lors de l'alimentation d'un composant électrique par le biais de la première sortie (A1) et de la deuxième sortie (A2) :
n) comparaison des états de charge des n unités d'accumulation d'énergie électrique (R1, R2, R3) ;
o) en cas de dépassement de la différence d'état de charge prédéfinie entre les n unités d'accumulation d'énergie électrique (R1, R2, R3), établissement d'une liaison électrique entre l'unité d'accumulation d'énergie électrique ayant l'état de charge le plus élevé et la première sortie (A1) ainsi que la deuxième sortie (A2), ainsi qu'interruption de la liaison électrique entre les n-1 unités d'accumulation d'énergie électrique restantes et la première sortie (A1) et/ou la deuxième sortie (A2) par une commande appropriée d'au moins les premiers commutateurs (S11, S12, S13) et les deuxièmes commutateurs (S21, S22, S23) ;
p) alimentation du composant électrique en énergie électrique par l'unité d'accumulation d'énergie électrique ayant l'état de charge le plus élevé, jusqu'à ce que l'état de charge de l'unité d'accumulation d'énergie électrique se soit aligné, au moins jusqu'à la différence d'état de charge prédéfinie, sur les états de charge des n-1 unités d'accumulation d'énergie électrique restantes.

12. Procédé de charge selon la revendication 9, **caractérisé en ce qu'**à l'étape i), au moins un commutateur est actionné de manière cadencée pendant une période définie.

13. Procédé de charge selon l'une des revendications 6 à 10, **caractérisé en ce que** les états de charge (SOC1, SOC2, SOC3) des différentes unités d'accumulation d'énergie électrique (R1, R2, R3) sont surveillés et, en cas de dépassement d'une différence d'état de charge définie entre deux unités d'accumulation d'énergie électrique (R1, R2, R3) quelconques, un composant électrique raccordé par le biais de la première sortie (A1) et de la deuxième sortie (A2) est alimenté en énergie par l'unité d'accumulation d'énergie électrique (R1, R2, R3) ayant l'état de charge (SOC1, SOC2, SOC3) le plus élevé par une commande appropriée d'au moins les premiers (S11, S12, S13), les deuxièmes (S21, S22, S23) et les troisièmes commutateurs (S31, S32).

14. Procédé de charge selon l'une des revendications 6 à 11, **caractérisé en ce que** les unités d'accumulation d'énergie électrique (R1, R2, R3) sont chargées uniformément en changeant au moins l'une des unités d'accumulation d'énergie électrique (R1, R2, R3) à charger sélectionnées à l'étape a).

15. Procédé de charge selon l'une des revendications 6 à 12, **caractérisé en ce que** l'au moins une unité d'accumulation d'énergie électrique (R1, R2, R3) qui alimente le composant électrique est changée de manière cyclique en fonction de la décision prise à l'étape a).
